# EUROPÄISCHE PATENTANMELDUNG

(11) **EP 2 157 347 A1**
(43) Veröffentlichungstag der Anmeldung: **24.02.2010**
(21) Anmeldenummer: 09010647.7
(22) Anmeldetag: 19.08.2009
(51) Int. Cl.: F16K 31/163, F16K 31/528

(54) **Bistabile Betätigungsvorrichtung für ein Ventil**

(30) Priorität: 20.08.2008 DE 102008038438
(71) Anmelder: KNORR-BREMSE Systeme für Nutzfahrzeuge GmbH, 80809 München (DE)
(72) Erfinder: Vollmer, Otto, 80689 München (DE); Mederer, Martin, 80797 München (DE)
(74) Vertreter: Mattusch, Gundula

(57) **Zusammenfassung**

Die Erfindung betrifft eine Betätigungsvorrichtung (18, 20, 54, 67, 73) für ein Ventil (12) mit mindestens zwei selbsthaltenden Betriebszuständen. Die Betätigungsvorrichtung (18, 20, 54, 67, 73) umfasst eine Selbsthaltevorrichtung (54) mit einem drehbar gelagerten Rastierteil (20) und einem Verdrehteil (18). Das Verdrehteil (18) ist dazu vorgesehen, das Rastierteil (20) während eines Betätigungsvorgangs zu drehen. Das Verdrehteil (18) ist mittels eines Kurvengetriebes (73) drehbar gelagert.

Außerdem betrifft die Erfindung ein Betätigungsverfahren für ein Ventil (12) mit mindestens zwei selbsthaltenden Betriebszuständen. Zunächst wird ein Verdrehteil (18) mittels Verschieben mit einem Rastierteil (20) verkoppelt. Mittels Fortführen des Verschiebens wird ein Klauen (56) des Rastierteils (20) aus einer Haltenut (58) ausgefahren. Durch weiteres Fortführen des Verschiebens wird mittels eines Kurvengetriebes (73) ein Drehen des Verdrehteils (18) bewirkt. Mittels eines Umkehrens des Verschiebens erfolgt ein Zurückfahren des Klauens (56) des Rastierteils (20) auf eine Stütznase (50) oder in eine andere Haltenut (58).

## Beschreibung

Die Erfindung betrifft eine Betätigungsvorrichtung für ein Ventil mit mindestens zwei selbsthaltenden Betriebszuständen, wobei die Betätigungsvorrichtung eine Selbsthaltevorrichtung mit einem drehbar gelagerten Rastierteil und einem Verdrehteil umfasst, das dazu vorgesehen ist, das Rastierteil während eines Betätigungsvorgangs zu drehen.

Die Erfindung betrifft weiterhin ein Betätigungsverfahren für ein Ventil mit mindestens zwei selbsthaltenden Betriebszuständen.

In einigen Anwendungsbereichen - beispielsweise bei Ventilen für Feststellbremsen - ist ein Ventil mit mindestens zwei selbsthaltenden Betriebszuständen erwünscht. Dabei soll das Ventil auch ohne Anliegen eines Steuersignals in seinem zuletzt eingestellten Betriebszustand solange verharren, bis es ein erneutes Steuersignal zum Verändern des Betriebszustands erhält. Ein solches Ventil wird als bistabiles Ventil bezeichnet, wenn es genau zwei selbsthaltende Betriebszustände aufweist. Vom selben Anmelder wurde eine deutsche Patentanmeldung für ein bistabiles Ventil eingereicht, bei dem eine Hubbewegung eines Schiebeelements in eine Drehbewegung eines Tiefrastelements umgesetzt wird. Die Umsetzung der Hubbewegung in die Drehbewegung erfolgt mittels eines an dem Tiefrastelement angeordneten Zahnkranzes, wobei ein an dem Schiebelement angeordneter Zahnkranz in den Zahnkranz des Tiefrastelements eingreift. Folglich bemisst sich hier eine Höhe des Zahnprofils nach einer Hubhöhe des Schiebeelements. Ein Zahnprofil mit einer derart großen Hubhöhe kann verschleißanfällig und aufwendig in der Herstellung sein.

Der Erfindung liegt die Aufgabe zugrunde, für ein Ventil eine gattungsgemäße Betätigungsvorrichtung bereitzustellen, welche eine geringere Verschleißanfälligkeit aufweist und weniger aufwendig in der Herstellung ist als die zuvor beschriebene Ventilbetätigungsvorrichtung.

Diese Aufgabe wird mit den Merkmalen der unabhängigen Ansprüche gelöst. Vorteilhafte Ausgestaltungen und Weiterbildungen der Erfindungen ergeben sich aus den abhängigen Ansprüchen.

Die vorliegende Erfindung baut auf einer gattungsgemäßen Betätigungsvorrichtung dadurch auf, dass das Verdrehteil mittels eines Kurvengetriebes gelagert ist. Mit dieser Art von Lagerung ist die Umsetzungsfunktion zwischen Hub- und Drehbewegung im Kurvengetriebe angeordnet. Unter Beachtung der erfindungsgemäßen Lehre ist es also nicht mehr erforderlich, die Höhe des Zahnprofils nach einer Hubhöhe des Schiebeelements zu bemessen und die genannten damit verbundenen Nachteile in Kauf zu nehmen.

Vorzugsweise ist eine Drehbeweglichkeit des Verdrehteils mittels einer Kulissenführung festgelegt.

Vorzugsweise umfasst das Verdrehteil eine Kulisse der Kulissenführung.

Besonders bevorzugt ist es, wenn das Verdrehteil in einem Ventilgehäuse angeordnet ist, wobei das Ventilgehäuse eine Kulisse der Kulissenführung umfasst.

Ebenfalls bevorzugt ist es, wenn das Verdrehteil ein Führungsteil der Kulissenführung umfasst.

Auch kann es vorteilhaft sein, wenn das Verdrehteil in einem Ventilgehäuse angeordnet ist, wobei das Ventilgehäuse ein Führungsteil der Kulissenführung umfasst.

Auch kann vorgesehen sein, dass das Führungsteil der Kulisse eine Kugel ist.

Im Übrigen kann das Verdrehteil auf einem beweglichen Betätigungskolben beweglich gelagert sein.

Darüber hinaus kann auf dem Verdrehteil ein Verschlussteil oder ein inneres Betätigungsteil des Ventils beweglich gelagert sein.

Schließlich ist es vorteilhaft, wenn zwischen dem Rastierteil und dem Verdrehteil eine Feder, insbesondere eine Druckfeder, angeordnet ist.

Die Erfindung baut dadurch auf dem gattungsgemäßen Verfahren auf, dass das Verfahren folgende Schritte umfasst:
Verkoppeln eines Verdrehteils mit einem Rastierteil mittels Verschieben des Verdrehteils in eine erste Verschieberichtung; Ausfahren eines Klauens des Rastierteils aus einer ersten Haltenut mittels Fortführen des Verschiebens und die erste Verschieberichtung; Drehen des Verdrehteils und des damit verkoppelten Rastierteils, bewirkt durch weiteres Fortführen des Verschiebens in die erste Verschieberichtung, wobei das Drehen des Verdrehteils mittels eines Kurvengetriebes bewirkt wird; und Zurückfahren eines der Klauen des Rastierteils auf eine Stütznase oder in einer zweiten Haltenut mittels Verschieben in einer zu der ersten Verschieberichtung unterschiedlichen Richtung, insbesondere entgegengesetzten Richtung.

Typischerweise weist das Ventil ein durchflussbeeinflussendes Teil auf, das zwischen mindestens einem Paar von Fluidanschlüssen einen Strömungswiderstand bereitstellt, dessen Höhe von der jeweiligen Betätigungsstellung abhängt. Zur Vereinfachung wird das durchflussbeeinflussende Teil im Folgenden als Verschlussteil bezeichnet. Nur in einer besonders bevorzugten Ausführungsform wirkt das Verschlussteil in einer der Betätigungsstellungen durchflusssperrend, so dass der Strömungswiderstand dann unendlich groß ist. Das Verschlussteil ist typischerweise in einem Schublager gelagert, wobei die Schubrichtung vorzugsweise parallel oder in Richtung zu einer Verdrehachse des Verdrehteils zeigt.

Die Erfindung wird nun mit Bezug auf die begleitenden Zeichnungen anhand einer besonders bevorzugten Ausführungsform beispielhaft erläutert.

Es zeigen:
- Figur 1: eine schematische, nicht maßstäbliche Ansicht eines Schnittes entlang einer Hauptachse eines erfindungsgemäßen Ventils in einer Entlüftungsstellung;
- Figur 2: eine schematische, nicht maßstäbliche Ansicht eines zur Hauptachse querverlaufenden Schnittes A-A durch einen Eingriffsbereich der Selbsthaltevorrichtung in der Entlüftungsstellung;
- Figur 3: eine schematische, nicht maßstäbliche Ansicht eines zur Hauptachse querverlaufenden Schnittes B-B durch einen Eingriffsbereich der Selbsthaltevorrichtung in der Belüftungsstellung;
- Figur 4: eine schematische, nicht maßstäbliche Ansicht des Schnittes entlang der Hauptachse des erfindungsgemäßen Ventils in einer Belüftungsstellung;
- Figur 5: eine schematische, nicht maßstäblichen Detailansicht eines Schnittes parallel zur Hauptachse in einem Kupplungsbereich zwischen dem Verdrehteil und dem Rastierteil;
- Figur 6: eine schematische, nicht maßstäbliche Ansicht des Schnittes entlang der Hauptachse des erfindungsgemäßen Ventils in der Belüftungsstellung während kein Steuerdruck anliegt; und
- Figur 7: eine schematische, nicht maßstäbliche Ansicht eines querverlaufenden Schnittes C-C durch einen Eingriffsbereich einer Ausführungsform der Erfindung mit einer zusätzliche Fixierung; und
- Figur 8: eine schematische nicht maßstäbliche Ansicht eines Schnittes dieser Ausführungsform in der Entlüftungsstellung.

In den folgenden Zeichnungen bezeichnen gleiche Bezugszeichen gleiche oder gleichartige Teile. Somit werden bei der Beschreibung der Figuren jeweils Beschreibungsteile einer oder mehrerer anderer Figuren implizit mitgenutzt.

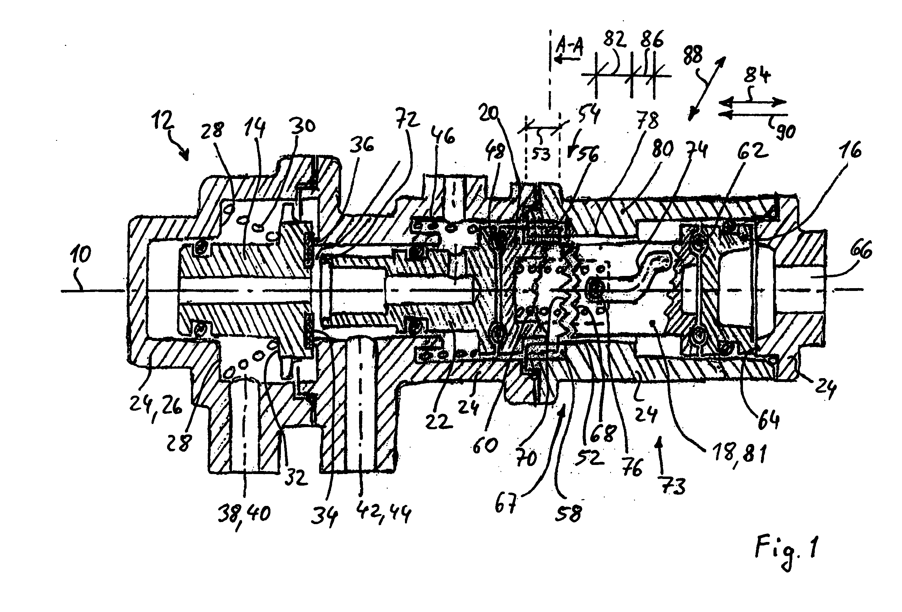

Fig. 1 zeigt einen Schnitt entlang einer Hauptachse 10 eines erfindungsgemäßen Ventils am Beispiel eines pneumatischen 3/2-Wegeventils 12 in einer Entlüftungsstellung SE. Das Ventil 12 kann - nach einem Toggle-Prinzip - von der Entlüftungsstellung SE in eine Belüftungsstellung SB und umgekehrt geschaltet werden. Es umfasst ein Verschlussteil 14 und folgende vier mechanisch in Serie geschaltete Betätigungskomponenten: einen Steuerkolben 16, ein Verdrehteil 18, ein Rastierteil 20 und einen inneren Betätigungskolben 22. Typischerweise ist jede dieser Ventilkomponenten 14, 16, 18, 20, 22 von einem Teil eines Ventilgehäuses 24 umgeben, das als Fluidbehälter dient. Typischerweise ist eine Innenwand des Ventilgehäuses 24 so geformt, dass es zugleich auch für eine oder mehrere der Ventilkomponenten 14, 16, 18, 20, 22 die Funktion einer Führungshülse erfüllt. Die Führungshülse 26 des Verschlussteils 14 weist eine Schulter 28 auf, auf der sich eine erste Druckfeder 30 abstützt, die eine Flanke 32 des Verschlussteils 14 von der Schulter 28 abspreizt und das Verschlussteil 14 mit seiner Ventilhauptdichtfläche 34 gegen einen Dichtrand 36 des Ventilgehäuses 24 presst. In dieser Stellung sperrt das Verschlussteil 14 eine fluidische Verbindung zwischen einem Anschluss 38 einer Vorratsleitung 40 und einem Anschluss 42 einer Verbraucherleitung 44. Der innere Betätigungskolben 22 ist dazu vorgesehen, zum Öffnen des Ventils 12 das Verschlussteil 14 von dem Dichtrand 36 abzuheben, um einen Durchfluss von dem Anschluss 38 der Vorratsleitung 40 zu dem Anschluss 42 der Verbraucherleitung 44 freizugeben. In der in der Figur gezeigten Entlüftungsstellung SE drückt der innere Betätigungskolben 22 allerdings nicht gegen das Verschlussteil 14, sondern befindet sich in seiner Ausgangsstellung. Ohne Anliegen eines fluidischen Drucks auf der Betätigungsseite kann der innere Betätigungskolben 22 mindestens zwei unterschiedliche Ruhestellungen beibehalten, die sich in der axialen Stellung des inneren Betätigungskolbens 22 unterscheiden. Ob und wie weit der innere Betätigungskolben 22 das Verschlussteil 14 gegen den Federdruck der ersten Feder 30 von dem Dichtungsrand 36 abhebt, hängt von der axialen Stellung des inneren Betätigungskolbens 22 ab. Die in Axialrichtung 84 unterschiedlichen Stellungen des inneren Betätigungskolbens 22 ergeben sich dadurch, dass der innere Betätigungskolben 22 in seiner Ruhestellung von einer zweiten Druckfeder 46 gegen einen ersten Kugelkranz 48 eines ersten Kugellagers gedrückt wird, und somit mittelbar auch gegen das Rastierteil 20. Das Rastierteil 20 bildet zusammen mit dazu vorgesehenen Stütznasen 50, die an einer Innenwand 52 des Ventilgehäuses 24 angeordnet sind, eine Selbsthaltevorrichtung 54 mit mindestens zwei Halteniveaus. Das Rastierteil 20 kann in Abhängigkeit von seiner Drehstellung α mit seinen Klauen 56 unterschiedlich tief in Nuten 58 eintauchen, die an der Innenwand 52 angeordnet sind. Die unterschiedliche Eintauch- oder Einrücktiefe 54 wird durch eine vom Umfangswinkel α abhängige Tiefe der Nuten 58 erreicht.

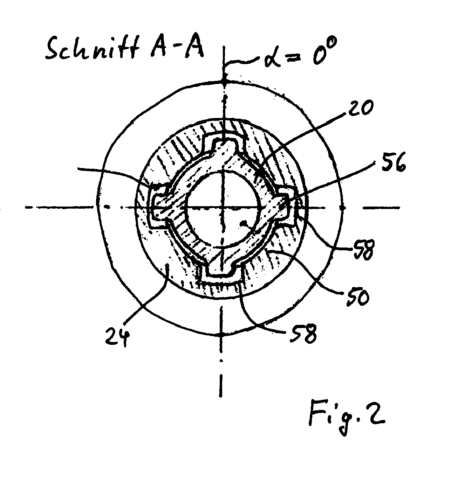

Fig. 2 zeigt, wie in einer Entlüftungsstellung SE in einer ersten Drehstellung 0° mehrere auf einen Umfang des Rastierteils 20 verteilt angeordnete Klauen 56 des Rastierteils 20 in tiefe Nuten 58 des Ventilgehäuses 24 eingetaucht sind.

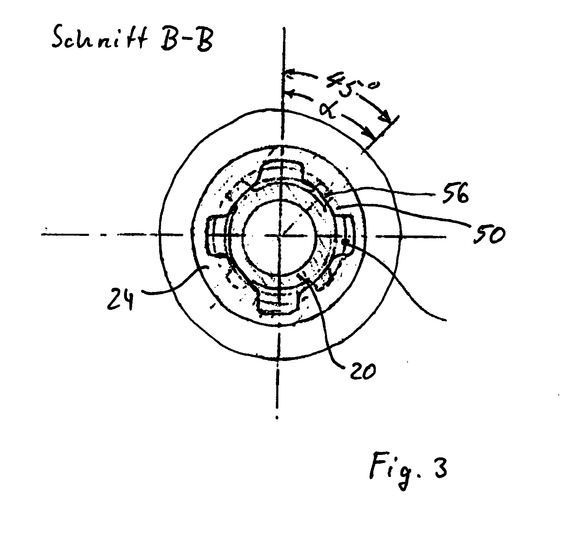

Im Vergleich dazu zeigt Fig. 3, wie in einer zweiten Drehstellung 45° (Belüftungsstellung SB) dieselben Klauen 56 des Rastierteils 20 in andere Nuten 58 des Ventilgehäuses 24 eintauchen, und zwar deshalb weit weniger tief, weil die Stütznasen 50 ein tieferes Eintauchen verhindern.

Die dritte Druckfeder 60 ist dazu vorgesehen, das Verdrehteil 18 während der Ruhestellung SE von dem Rastierteil 20 abzuspreizen, so dass das Verdrehteil 18 gegen einen zweiten Kugelkranz 62 eines zweiten Kugellagers drückt, und damit mittelbar auch gegen den Steuerkolben 16. Infolgedessen wird der Steuerkolben 16 in der Ruhestellung SE gegen eine innere Schulter 64 des Ventilgehäuses 24 geschoben. Die Abmessungen und Stärken der zweiten 46 und dritten 60 Druckfedern sind so bemessen, dass das Rastierteil 20 mit seinen Klauen 56 nicht - oder zumindest nicht wesentlich - von der dritten Druckfeder 60 in den Nuten 58 des Ventilgehäuses 24 angehoben wird, und zwar gegen die Federkraft der zweiten Druckfeder 46.

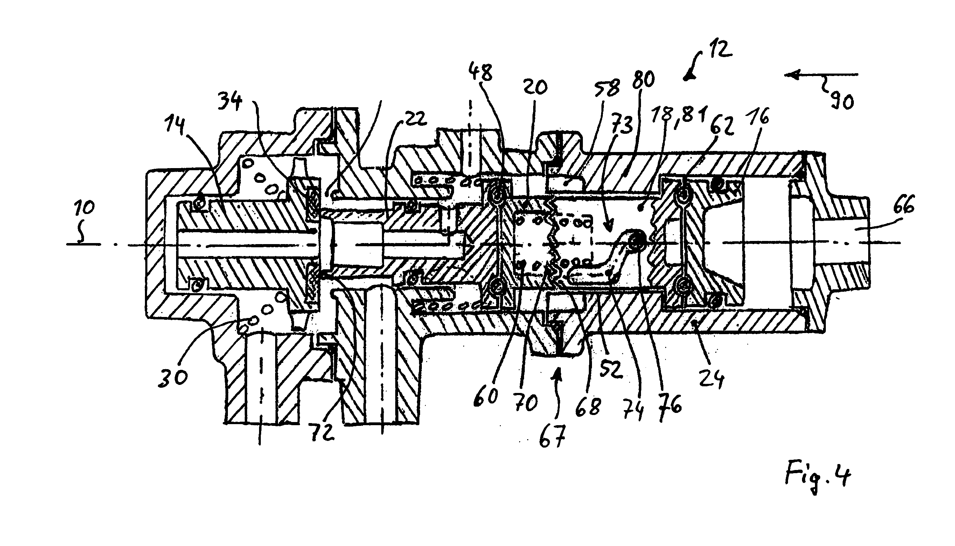

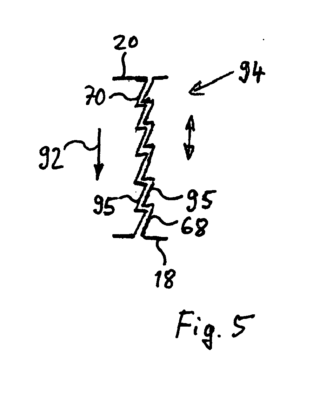

Fig. 4 zeigt einen Schnitt entlang der Hauptachse 10 des erfindungsgemäßen Ventils 12 in einer Belüftungsstellung SB während eines Anliegens eines Steuerdrucks. Hierbei liegt am Steueranschluss 66 ein Steuerdruck eines Steuerfluids (beispielsweise ein pneumatischer oder hydraulischer Druck) an. Beim Aufbau des Steuerdrucks werden die zweite und dritte Druckfeder 60 so weit zusammengepresst, dass sich das Verdrehteil 18 und das Rastierteil 20 an ihren Kupplungsflächen 68, 70 berühren und das Rastierteil 20 dann mit seinen Klauen 56 aus seiner Ruhestellung aus den Nuten 58 im Ventilgehäuse 24 angehoben wird. Dabei wird der innere Betätigungskolben 22 so weit angehoben, dass sein stirnseitiger Dichtungsrand 72 eine Dichtungsfläche 34 des Verschlussteils 14 berührt und das Verschlussteil 14 mit seiner Dichtungsfläche 34 gegen eine Kraft der ersten Druckfeder 30 in eine Arbeitsstellung hebt. Das Verdrehteil 18 übermittelt mittels des Rastierteils 20 die Schubkraft von einer ersten mechanischen Schnittstelle 62 großteils auf eine zweite mechanische Schnittstelle 48. Ein übriger Teil der Schubkraft, die von der ersten mechanischen Schnittstelle 62 ausgeht, wird mittels eines Kurvengetriebes 73, das in einem Bereich einer Umfangsfläche 81 des Verdrehteils 18 angeordnet ist, in ein Drehmoment des Verdrehteils 18 umgesetzt, wodurch das Verdrehteil gedreht wird. Das Kurvengetriebe 73 besteht beispielsweise aus einer in einer Wand 52 der Führungshülse 80 des Verdrehteils 18 zwar formschlüssig - jedoch beweglich - angeordneten Kugel 76 und aus einer in einer äußeren Umfangsfläche 81 des Verdrehteils 18 angeordneten Kulisse 74. Zusätzlich oder alternativ ist auch eine umgekehrte Zuordnung von Kugel 76 und Kulisse 74 möglich. Vorzugsweise verläuft die Kulisse 74 in einem ersten Hubbereich 82 in einer Axialrichtung 84 und in einem zweiten Hubbereich 86 in einer Richtung 88, die zwar nicht senkrecht, aber schräg zur Hubrichtung 90 gerichtet ist. Der erste Hubbereich 82 dient dazu, das Verdrehteil 18 durch eine Bewegung in Hubrichtung 90 mit dem Rastierteil 20 so in Berührung zu bringen, dass sich die Kupplungsflächen 68, 70 von Verdrehteil 18 und Rastierteil 20 berühren. Der zweite Hubbereich 86 dient dazu, das Rastierteil 20 gleichzeitig mit einer Fortführung der Bewegung in Axialrichtung 84 zusätzlich auch zu drehen. Dazu ist zwischen dem Verdrehteil 18 und dem Rastierteil 20 eine Kupplungsvorrichtung 67 (vorzugsweise je eine Kupplungsfläche 68, 70) vorgesehen, die zwischen dem Verdrehteil 18 und dem Rastierteil 20 in einer Drehrichtung 92 (siehe Fig. 5) eine ausreichend große Scherkraft bzw. ein ausreichend großes Drehmoment vermitteln kann. Damit der zweite Hubbereich 86 und die damit verbundene Drehbewegung nicht beginnt, bevor die Klauen 56 des Rastierteils 20 ausreichend weit aus den Nuten 58 herausgehoben wurden, ist eine Höhe des im ersten Hubbereich 82 bewirkten Hubs des Rastierteils 20 - insbesondere unter Berücksichtigung einer Toleranz - größer als eine Eintauchtiefe 53 der Klauen 56 des Rastierteils 20. Wenn das Rastierteil 20 und der innere Betätigungskolben 22 drehfest (d.h. relativ zueinander nicht drehbar) verbunden sind, muss auch der innere Betätigungskolben 22 drehbar gelagert sein. Wenn dann das Verschlussteil 14 nicht - oder nicht so leicht - drehbar gelagert ist, würde sich der Dichtungsrand 72 während des Zusammenpressens der ersten Druckfeder 30 auf der Dichtungsfläche 34 des Verschlussteils 14 drehen, womit eine Reinigung der Dichtungsfläche 34 und des Dichtungsrands 36, aber auch eine Abnutzung der Dichtungsfläche 34 und des Dichtungsrands 36 bewirkt werden kann. Falls jedoch das Rastierteil 20 und der innere Betätigungskolben 22 - beispielsweise mittels eines Kugelkranzes 48 eines Kugellagers - drehbar gekoppelt sind, brauchen weder der Betätigungskolben 22 noch das Verschlussteil 14 drehbar gelagert sein. Im zweiten Hubbereich 86 werden die Klauen 56 des Rastierteils 20 durch die Drehhubbewegung in eine Umfangswinkelstellung α versetzt, in der sie beim Rückgängigmachen des Anhebens des Rastierteils 20 auf die an der Innenwand 52 des Ventilgehäuses 24 befestigten Stütznasen 50 aufsetzen würden. Das Ventil 12 umfasst ein Mittel 94, das dazu vorgesehen ist, dass sich das Rastierteil 20 - und damit die Klauen 56 - nicht während desselben Teilhubbereichs 86, der eine Drehung des Rastierteils 20 in der einen Drehrichtung 92 ermöglichte, wieder in die vorherige Drehstellung zurückdreht. Dazu kann beispielsweise zwischen Rastierteil 20 und Ventilgehäuse 24 oder zwischen dem Verdrehteil 18 und dem Rastierteil 20 eine Sperrklinkenfunktion oder ein Freilauf 94 (Einwegkupplung) vorgesehen sein. Die Funktion eines Freilaufs 94 kann durch eine wie in Fig. 5 gezeigte sägezahnartigen Verzahnung 96 mindestens einer der beiden Kupplungsflächen 68, 70 realisiert werden.

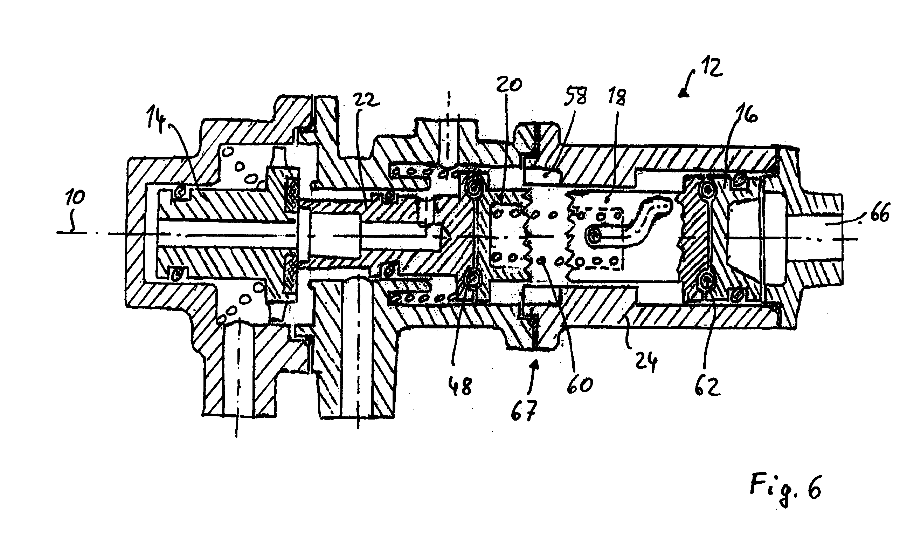

Fig. 6 zeigt einen Schnitt entlang der Hauptachse 10 des erfindungsgemäßen Ventils 12 in der Belüftungsstellung SB während kein Steuerdruck anliegt; d.h. in einer Ventilstellung, in der - ausgehend von dem vorbeschrieben Ventilzustand - der Steuerdruck am Steueranschluss 66 des Ventils 12 abgebaut wurde. Infolgedessen presst der Steuerdruck die dritte Druckfeder 60 nicht mehr zusammen; und das Verdrehteil 18 sowie mittelbar der Steuerkolben 16 werden durch die dritte Druckfeder 60 in die in der Figur gezeigte Ruhestellung geschoben. Nach dem Aufsetzen der Klauen 56 des Rastierteils 20 auf den Stütznasen 50 verbleiben das Rastierteil 20 und somit mittelbar auch der innere Betätigungskolben 22, wie auch das Verschlussteil 14, in der in der Figur gezeigten angehobenen Stellung.

Sobald am Steueranschluss 66 wieder ein ausreichender Steuerdruck angelegt wird, ist der Ablauf zunächst so, wie zu Fig. 4 beschrieben. Im zweiten Hubbereich 86 werden die Klauen 56 des Rastierteils 20 durch die Drehhubbewegung in eine Umfangswinkelstellung α versetzt, in der sie beim Rückgängigmachen des Anhebens des Rastierteils 20 nicht auf die Stütznasen 50 aufsetzen würden, sondern in die tieferen Nuten 58 eintauchen würden.

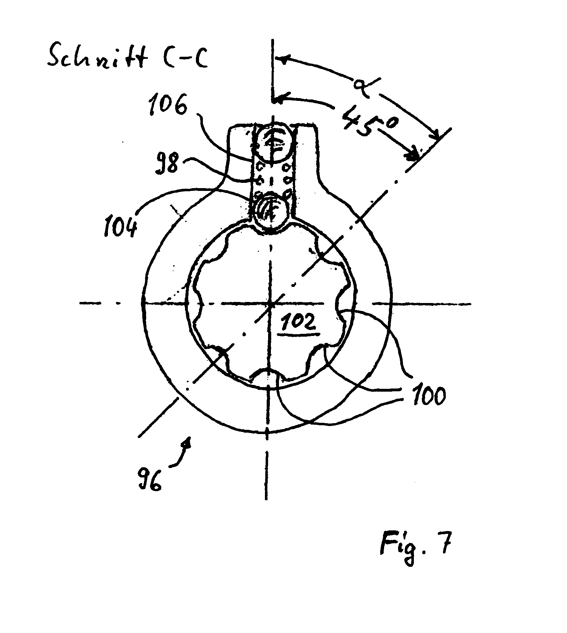

Fig. 7 zeigt einen querverlaufenden Schnitt C-C durch einen Eingriffsbereich einer Ausführungsform der Erfindung mit einer optionalen Fixierung 96. Hierbei werden bestimmte Drehwinkel α (hier 0°, 45°, 90°, 135°, 180°, 225°, 270°, 315°) des Verdrehteils 18 dadurch bevorzugt, dass eine vierte Druckfeder 98 aufgrund einer dellenartigen Ausformung 100 einer Rastscheibe 102 bei einem Drehwinkel α, in denen eine durch die vierte Druckfeder 98 vorgespannte Kugel 104 in die dellenartige Ausformung 100 teilweise einrücken kann und damit energetisch günstigeren, d.h. entspannteren, Zustand einnehmen kann.

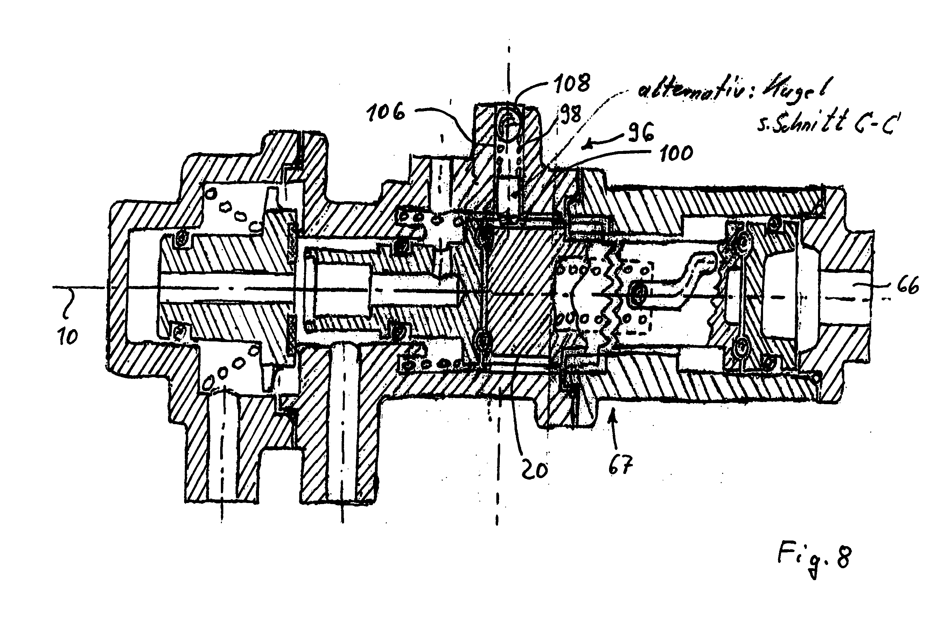

Fig. 8 zeigt einen Schnitt dieser Ausführungsform in der Entlüftungsstellung SE, in der die Rastscheibe 102 mit dem Rastierelement 20 eine mechanisch fest verbundenen Baueinheit bildet, wobei die vierte Druckfeder 98 und die vorgespannte Kugel 104 in einer Bohrung 106 des Ventilgehäuses 24 unter einer Schraube 108 fixiert sind.

Das fluidische Betätigungssignal ist typischerweise ein pneumatisches Druck- oder Unterdrucksignal oder ein hydraulisches Druck- oder Unterdrucksignal. Abweichend von den Ausführungsformen der Figuren können die zur Betätigung erforderlichen mechanischen Betätigungsimpulse auch durch nichtfluidische Krafteinwirkung, beispielsweise mittels eines Elektromagneten erzeugt werden. Unabhängig davon kann bei entsprechender Umgestaltung der Angriffspunkte statt der ersten 30, zweiten 46 und/oder dritten 60 Druckfeder jeweils auch eine Zugfeder verwendet werden. Statt der Kugeln 76 und/oder 104 können auch anders geformte Körper, beispielsweise zylinderförmige Körper, verwendet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Hauptachse
- 12: Ventil
- 14: Verschlussteil; durchflussbeeinflussendes Teil
- 16: Steuerkolben
- 18: Verdrehteil
- 20: Rastierteil
- 22: innerer Betätigungskolben
- 24: Ventilgehäuse
- 26: Führungshülse
- 28: Schulter der Führungshülse 26
- 30: erste Druckfeder
- 32: Flanke des Verschlussteils 14
- 34: Dichtungsfläche des Verschlussteils 14
- 36: Dichtrand im Ventilgehäuse 24
- 38: Anschluss zur Vorratsleitung 40
- 40: Vorratsleitung
- 42: Anschluss zur Verbraucherleitung 44
- 44: Verbraucherleitung
- 46: zweite Druckfeder
- 48: erster Kugelkranz eines ersten Kugellagers
- 50: Stütznase
- 52: Innenwand des Ventilgehäuses 24
- 53: Einrück- oder Eintauchtiefe
- 54: Selbsthaltevorrichtung
- 56: Klauen
- 58: Nuten des Ventilgehäuses 24
- 60: dritte Druckfeder
- 62: zweiter Kugelkranz eines zweiten Kugellagers
- 64: innere Schulter des Ventilgehäuses 24
- 66: Steueranschluss
- 67: Kupplungsvorrichtung
- 68: Kupplungsfläche des Rastierteils 20
- 70: Kupplungsfläche des Verdrehteils 18
- 72: Dichtungsrand des inneren Betätigungskolbens 22
- 73: Kurvengetriebe
- 74: Kulisse
- 76: Kugel
- 78: Wand der Führungshülse 80
- 80: Führungshülse des Verdrehteils 18
- 81: äußere Umfangsfläche des Verdrehteils 18
- 82: erster Hubbereich
- 84: Axialrichtung
- 86: zweiter Hubbereich
- 88: Richtung der Kulisse im zweiten Hubbereich
- 90: Hubrichtung
- 92: Wirkdrehrichtung des Rastierteils 20
- 94: Freilauf
- 96: Fixierung
- 98: vierte Druckfeder
- 100: dellenartige Ausformung
- 102: Rastscheibe
- 104: vorgespannte Kugel
- 106: Bohrung
- 108: Schraube
- SB: Belüftungsstellung
- SE: Entlüftungsstellung

## Patentansprüche

1. Betätigungsvorrichtung (18, 20, 54, 67, 73) für ein Ventil (12) mit mindestens zwei selbsthaltenden Betriebszuständen, wobei die Betätigungsvorrichtung (18, 20, 54, 67, 73) eine Selbsthaltevorrichtung (54) mit einem drehbar gelagerten Rastierteil (20) und einem Verdrehteil (18) umfasst, das dazu vorgesehen ist, das Rastierteil (20) während eines Betätigungsvorgangs zu drehen, **dadurch gekennzeichnet, dass** das Verdrehteil (18) mittels eines Kurvengetriebes (73) gelagert ist.

2. Betätigungsvorrichtung (18, 20, 54, 67, 73) gemäß Anspruch 1, **dadurch gekennzeichnet, dass** eine Drehbeweglichkeit des Verdrehteils (18) mittels einer Kulissenführung (74, 76) festgelegt ist.

3. Betätigungsvorrichtung (18, 20, 54, 67, 73) gemäß Anspruch 1 oder Anspruch 2, **dadurch gekennzeichnet, dass** das Verdrehteil (18) eine Kulisse (74) der Kulissenführung (74, 76) umfasst.

4. Betätigungsvorrichtung (18, 20, 54, 67, 73) gemäß einem der Ansprüche 1 bis 3, **dadurch gekennzeichnet, dass** das Verdrehteil (18) in einem Ventilgehäuse (24) angeordnet ist, wobei das Ventilgehäuse (24) eine Kulisse (74) der Kulissenführung (74, 76) umfasst.

5. Betätigungsvorrichtung (18, 20, 54, 67, 73) gemäß einem der Ansprüche 1 bis 4, **dadurch gekennzeichnet, dass** das Verdrehteil (18) ein Führungsteil (76) der Kulissenführung (74, 76) umfasst.

6. Betätigungsvorrichtung (18, 20, 54, 67, 73) gemäß einem der Ansprüche 1 bis 5, **dadurch gekennzeichnet, dass** das Verdrehteil (18) in einem Ventilgehäuse (24) angeordnet ist, wobei das Ventilgehäuse (24) ein Führungsteil (76) der Kulissenführung (74, 76) umfasst.

7. Betätigungsvorrichtung (18, 20, 54, 67, 73) gemäß einem der Ansprüche 1 bis 6**, dadurch gekennzeichnet, dass** das Führungsteil (76) der Kulisse (74) eine Kugel (76) ist.

8. Betätigungsvorrichtung (18, 20, 54, 67, 73) gemäß einem der Ansprüche 1 bis 7, **dadurch gekennzeichnet, dass** das Verdrehteil (18) auf einem beweglichen Betätigungskolben (16) beweglich gelagert ist.

9. Betätigungsvorrichtung (18, 20, 54, 67, 73) gemäß einem der Ansprüche 1 bis 8, **dadurch gekennzeichnet, dass** auf dem Verdrehteil (18) ein Verschlussteil (14) oder inneres Betätigungsteil (22) des Ventils (12) beweglich gelagert ist.

10. Betätigungsvorrichtung (18, 20, 54, 67, 73) gemäß einem der Ansprüche 1 bis 9, **dadurch gekennzeichnet, dass** zwischen dem Rastierteil (20) und dem Verdrehteil (18) eine Feder (60), insbesondere eine Druckfeder (60), angeordnet ist.

11. Betätigungsverfahren für ein Ventil (12) mit mindestens zwei selbsthaltenden Betriebszuständen, **dadurch gekennzeichnet, dass** das Betätigungsverfahren folgende Schritte umfasst:
- Verkoppeln eines Verdrehteils (18) mit einem Rastierteil (20) mittels Verschieben des Verdrehteils (18) in eine erste Verschieberichtung;
- Ausfahren eines Klauens (56) des Rastierteils (20) aus einer ersten Haltenut (58) mittels Fortführen des Verschiebens und die erste Verschieberichtung;
- Drehen des Verdrehteils (18) und des damit verkoppelten Rastierteils (20), bewirkt durch weiteres Fortführen des Verschiebens in die erste Verschieberichtung, wobei das Drehen des Verdrehteils mittels eines Kurvengetriebes (73) bewirkt wird; und
- Zurückfahren eines der Klauen (56) des Rastierteils (20) auf eine Stütznase (50) oder in einer zweiten Haltenut (58) mittels Verschieben in einer zu der ersten Verschieberichtung unterschiedlichen Richtung, insbesondere entgegengesetzten Richtung.
